# EUROPÄISCHE PATENTSCHRIFT

(11) **EP 0 417 164 B1**
(45) Veröffentlichungstag und Bekanntmachung des Hinweises auf die Patenterteilung: **12.01.1994**
(21) Anmeldenummer: 89906365.5
(22) Anmeldetag: 23.05.1989
(51) Int. Cl.: C04B 26/10

(54) **KUNSTSTEINE, VERFAHREN ZUR HERSTELLUNG UND VERWENDUNG DERSELBEN**
PROCESS FOR PRODUCING ARTIFICIAL STONES, AND THEIR USE
PIERRES ARTIFICIELLES, LEUR PROCEDE DE FABRICATION ET LEUR UTILISATION

(30) Priorität: 27.05.1988 DE 3818051
(43) Veröffentlichungstag der Anmeldung: 20.03.1991
(73) Patentinhaber: SCHULTZE-KRAFT, Andreas, D-64342 Seeheim-Jugenheim (DE)
(72) Erfinder: SCHULTZE-KRAFT, Andreas, D-64342 Seeheim-Jugenheim (DE)
(74) Vertreter: Werner, Hans-Karsten, Dr.Dipl.-Chem.
(86) Internationale Anmeldenummer: EP8900565
(87) Internationale Veröffentlichungsnummer: WO8911457

(56) Entgegenhaltungen:
- EP-A- 0 187 688
- DE-A- 1 646 711
- DE-A- 1 912 466
- DE-A- 3 502 563
- FR-A- 1 411 546
- FR-A- 2 457 753
- Kunststoffe, Band 77, Nr. 4, April 1987, Carl Hanser Verlag (München, DE) R. Kreis: "Polymerbeton ein bewährter Baustoff", Seiten 423-425, s. Seite 424, Absätze 3, 4
- SPE Journal, August 1966, Soc. of Plastics Engineers Inc. (Greenwich, US) A.G. Winfield: "Cultured stones", Seiten 36-39

## Beschreibung

Die vorliegende Erfindung betrifft Kunststeine aus feinteiligem Glasbruch und Kunstharzen mit großer optischer, gewichtsmäßiger und berührungsästhetischer Ähnlichkeit mit Natursteinen, Verfahren zur Herstellung derselben sowie ihre Verwendung zur Herstellung von Reproduktionen von Kunstgegenständen, kunstgewerblichen Artikeln, Verpackungen für Luxusartikel, dekorativen Artikeln des täglichen Gebrauchs, Abdeckungen für elektrische Schalter und Steckdosen, für den Innenausbau von Wohn-, Verwaltungs-, Repräsentations- und gastronomischen Räumen, Küchen, Badezimmern, Schwimmbadauskleidungen sowie Zwischenprodukten für die Weiterverarbeitung durch Künstler, Kunsthandwerker und Heimwerker.

Kunststeine werden seit langem vor allem zur Reproduktion von Kunstgegenständen sowie für die Ausgestaltung von Wänden und Böden im Baubereich hergestellt und verwendet, wobei sie im allgemeinen aus einem hydraulisch abbindenden Bindemittel und verschieden großen und verschieden gefärbten Füllstoffen bestehen. Sie werden im allgemeinen im Gußverfahren hergestellt und können nach dem Aushärten gewünschtenfalls oberflächlich nachbehandelt werden, wobei die Oberflächen insbesonders nachträglich geglättet, poliert oder mit einer Schutzschicht versehen werden. Als Bindemittel werden insbesondere Gips, aber auch Zement, Sorell-Zement und puzzolanisch abbindende Substanzen verwendet. Den meisten Kunststeinen sieht man jedoch im allgemeinen sofort an, daß es sich um Kunststeine handelt, da sie mit Natursteinen eine zu geringe Ähnlichkeit aufweisen.

Ein typisches derartiges Verfahren unter Verwendung von Kunstharzen ist beispielsweise beschrieben in der DE-OS 19 12 466.

Aus dem DE-GM 85 01 998 ist ein plattenförmiges Bauelement bekannt, das aus Einscheiben-Sicherheitsglasbruch und einem Bindemittel wie Epoxidharz besteht. Da es im unbehandelten Zustand eine unebene Oberfläche aufweist, wird es meist nach dem Aushärten des Bindemittels glattgeschliffen.

Die Erfindung hat sich die Aufgabe gestellt, Kunststeine mit großer optischer, gewichtsmäßiger und berührungsästhetischer Ähnlichkeit mit Natursteinen zu entwickeln, die einfach, preiswert, umweltfreundlich und in größerer Stückzahl reproduzierbar hergestellt werden können, so daß sie auch sehr vielseitig verwendet werden können und dabei insbesondere gehobenen Ansprüchen gewachsen sind.

Dabei sollen möglichst verschiedenartige Natursteine nachgeahmt werden, insbesondere solche Natursteine, die schon immer zur Herstellung von Kunstgegenständen, kunstgewerblichen Artikeln, Schmuck, Artikeln des täglichen Gebrauches sowie für den gehobenen Innenausbau verwendet worden sind, wie Granit, Sandstein, Schiefer, Basalt, Alabaster, Marmor oder Jade. Die Oberfläche dieser Kunststeine soll als Relief mit filigraner Struktur ausgebildet sein, wobei die Oberfläche den Oberflächen von Bruchsteinflächen und/oder Steinschnitzreliefs entsprechen soll. Auch die mechanische Stabilität der Kunststeine soll der der natürlichen Steine vergleichbar sein, um sie vergleichbaren Belastungen aussetzen zu können.

Diese Aufgabe kann überraschend einfach dadurch gelöst werden, daß man ein Gemisch aus 15 bis 30 Gewichts-%, gegebenenfalls an- oder eingefärbtem, transparentem, härtbarem oder thermoplastisch verformbarem Kunstharz mit 40 bis 80 Gewichts-% splitterförmigem und/oder granuliertem Altglas der Korngrößen 0,05 bis 3 mm sowie gewünschtenfalls weiteren ähnlichen Komponenten im Preß- oder Gußverfahren verarbeitet und gewünschtenfalls die Oberfläche nachträglich so nachbehandelt, daß sie eine rauhere, gegebenenfalls sogar poröse und verwittert wirkende Struktur annimmt. Je nach gewünschter nachzuahmender Natursteinart kann weißes, grünes, braunes oder gemischtes Altglas zum Einsatz kommen. Es kann auch verschieden fein vermahlen sein und gegebenenfalls nur aus ausgewählten Siebfraktionen des splitterförmigen und/oder granulierten Altglases bestehen. Aus Stabilitätsgründen kommt dabei jedoch stets ein Anteil an feinteiligem Altglas zum Einsatz. Die Korngrößen sämtlicher Komponenten sollen in dem Bereich zwischen 0,05 und 3 mm liegen, wobei der Bereich 0,1 bis 2,4 mm besonders bevorzugt ist.

Als weitere Komponenten neben Altglas werden je nach dem angestrebten Ziel 0 bis 40 Gew.-% transparentes, opakes oder stark eingefärbtes, splitterförmiges und/oder granuliertes Neuglas mit den Korngrößen 0,05 bis 3 mm verwendet. Hierdurch ist es möglich, optische Effekte zu erzielen, die mit Altglas alleine nicht erzielbar sind. Um den Anteil an Neuglas zu senken oder ganz darauf verzichten zu können und den Anteil an Altglas zu erhöhen, ist es auch möglich, Altglas der Korngröße 0,05 bis 0,3 mm mit härtbarem Kunstharz zu einem Zwischenprodukt zu verarbeiten, das meist 80 bis 92 Gewichtsteile Altglasmehl und 8 bis 20 Gewichtsteile gehärtetes Kunstharz enthält. Dieses Material wird zu einem Mahlgut der Korngrößen 0,5 bis 3 mm vermahlen und anstelle des entsprechenden Anteils Neuglas und/oder Altglas eingesetzt. Dieses Material kann gewünschenfalls pigmentiert oder eingefärbt werden. Da bei der technisch sehr einfachen Herstellung dieses farbigen Mahlguts im Gegensatz zur herkömmlichen Farbglasherstellung keine energieintensiven Schmelzvorgänge involviert sind, ist der Einsatz von aus Altglas gewonnenem Material dem von farbigem Neuglas aus Kosten- und Umweltschutzgründen vorzuziehen.

Eine gutes Beispiel für den Einsatz von diesem Mahlgut ist die Reproduktion von Granit-Strukturen. Der in Europa extrem teure "blaue" brasilianische Granit z.B. setzt sich aus leicht transluzenten hellgrauen, mittelgrauen und grünlichen sowie opakten blauen Körnern bzw. Kristallen in Größen zwischen 1 und 3 mm zusammen. Während die grünlichen Körner aus grünem Flaschenglas erzeugt und die grauen aus farblosem Altglasmehl in Verbindung mit pigmentiertem Bindemittel sowie dem Zuschlag von hellem Quarzsand bzw. -splitt gebildet werden können, kann für die blauen Körner anstelle von opakem Blauglas vorteilhaft Mahlgut in opak-blauer Einfärbung verwendet werden.

Mit dem Mahlgut steht grundsätzlich ein Ausgangsmaterial zur Verfügung, das eine äußerst naturgetreue Reproduktion hinsichtlich Farbe und Transluzenz/Opazität praktisch jedes in der Natur vorkommenden Steinkristalls ermöglicht.

Enthält ein Kunststein viel Mahlgut (nämlich bis zu 75 Gew.-%), kann der Anteil an darüber hinaus verwendetem Altglas entsprechend gesenkt werden, z.B. auf 10 Gew.-%.

Um besondere Effekte zu erzielen und bestimmte Gesteinsarten, wie beispielsweise Granit, nachzuahmen, werden 0 bis 35 Gew.-% anorganische Füllstoffe aus der Gruppe Quarzsand, Quarzmehl, Steinmehl, natürliche oder synthetische, gemahlene und/oder granulierte Silikate in den Korngrößen 0,05 bis 3 mm zugegeben. Schließlich können 0 bis 0,5 Gew.-% Farbstoffe und/oder Farbpigmente mit eingemischt werden, wobei zur Erzielung von besonderen optischen Effekten auch auf eine völlig homogene Vermischung gerade der Farbstoffe und Farbpigmente verzichtet werden kann, um die in natürlichen Steinen beobachteten Schlieren und Farbschattierungen nachzuahmen.

Die nachträgliche Veränderung der Oberfläche kann beispielsweise dadurch erfolgen, daß mit Hilfe eines organischen Lösungsmittels die Kunstharzkomponente angelöst oder gequollen wird, danach mit besonders feinem Glaspulver oder einem anderen anorganischen Füllstoff beschichtet wird. Nach der Verdampfung des Lösungsmittels kann durch Abblasen mit Preßluft der nur locker anhaftende Rest dieser Feinbeschichtung entfernt werden, so daß eine adhäsiv aufgebrachte Oberflächenfeinbeschichtung entsteht. Bei Verwendung von weitgehend chemikalienresistenten UP-Harztypen muß dieser Vorgang in einem Stadium erfolgen, in dem das Kunstharz noch nicht vollständig ausgehärtet ist.

Bei Verwendung der meisten UP-Harztypen kann auf den Vorgang des Anlösens aber auch ganz verzichtet werden, wenn das Kunststein-Formteil möglichst früh entformt wird, d.h. zu einem Zeitpunkt, da es bereits die für die Entformung erforderliche Formstabilität aufweist, der Polymerisationsprozeß jedoch noch keineswegs abgeschlossen ist. In dieser Phase ist die Oberfläche noch ausreichend klebrig, um das mit Hilfe von Druckluft aufgetragene Glasmehl und/oder Steinmehl aufzunehmen. Dem auf diese Weise oberflächenbehandelten Kunststein muß zur Erzielung optimaler Beständigkeitseigenschaften anschließend jedoch ein vollständiges Aushärten (Nachhärtung) durch entsprechendes Verweilen in einem Raum mit erhöhter Lufttemperatur (50 - 80°C) erlaubt werden.

Weiterhin ist es auch möglich, der Oberfläche eine nachträgliche poröse und verwittert wirkende Dekoroberfläche zu geben, indem insbesondere in die äußerste Schicht eine gegebenenfalls eingefärbte oder pigmentierte, körnige, wasserlösliche Komponente miteingegossen oder eingepreßt wird, die anschließend mit Wasser ausgewaschen werden kann. Als wasserlösliche, körnige Komponenten kommen beispielsweise Kochsalz, Zucker und andere wasserlösliche, körnige Substanzen in Frage, die sich nachträglich mit Wasser herauslösen lassen und dabei gegebenenfalls durch Reaktion der ihnen beigegebenen Farbstoffe oder Farbpigmente schlierenförmige Verfärbungen entstehen lassen.

Weitere sehr reizvolle Ausgestaltungen der Kunststeine können dadurch entstehen, daß man sie aus mehreren, in der Zusammensetzung unterschiedlichen Schichten herstellt, die sich zunächst äußerlich, gegebenenfalls aber auch bezüglich der mechanischen Stabilität unterscheiden. Solche Kunststeine bzw. aus Kunststein gefertigten Artikel bestehen dann aus einer stabilen Trägerschicht und einer damit fest verbundenen, weniger stabilen Dekorschicht. Schließlich ist es möglich, die Rückseite und/oder Innenseite von derartigen Kunststeinen flach oder hohl auszugestalten und gegebenenfalls durch Fasermaterial, wie Glasfasern, und/oder Metalldrahtmatten, beispielsweise Stahldrahtmatten, zu verstärken.

Gegenstand der vorliegenden Erfindung sind somit zunächst Kunststeine aus feinteiligem Glasbruch und Kunstharzen, dadurch gekennzeichnet, daß sie große optische, gewichtsmäßige und berührungsästhetische Ähnlichkeit mit Natursteinen aufweisen und bestehen aus
15 bis 30 Gew.-% gegebenenfalls an- oder eingefärbtem, transparentem, gehärtetem oder thermoplastisch verformtem Kunstharz,
10 bis 80 Gew.-% weißem, grünem, braunem oder gemischtem, splitterförmigem und/oder granuliertem Altglas der Korngrößen 0,05 bis 3 mm,
0 bis 40 Gew.-% transparentem, opakem oder stark eingefärbtem splitterförmigem und/oder granuliertem Neuglas der Korngrößen 0,05 bis 3 mm,
0 bis 75 Gew.-% transparentem, opakem oder stark eingefärbtem Mahlgut der Korngrößen 0,5 bis 3 mm, hergestellt aus 80 bis 92 Gewichtsteilen Altglas der Korngröße 0,05 bis 0,3 mm und 8 bis 20 Gewichtsteilen härtbarem Kunstharz,
0 bis 35 Gew.-% anorganischen Füllstoffen aus der Gruppe Quarzsand, Quarzmehl, Steinmehl, natürliche oder synthetische, gemahlene und/oder granulierte Silikate der Korngrößen 0,05 bis 3 mm und
0 bis 0,5 Gew.-% Farbstoffe und/oder Farbpigmente, wobei die Oberfläche im Preß- oder Gießverfahren als Relief mit filigraner Struktur ausgebildet ist, welche der Oberfläche von Bruchsteinflächen und/oder Steinschnitzreliefs entspricht, oder daß die Oberfläche eine nachträglich aufgebrachte adhäsive Oberflächenfeinbeschichtung aufweist, oder daß die Oberfläche eine nachträglich erzeugte poröse, verwittert wirkende Dekoroberfläche aufweist.

Ein weiterer Gegenstand der Erfindung ist das Verfahren zur Herstellung von Kunststeinen aus feinteiligem Glasbruch und Kunstharzen mit großer optischer, gewichtsmäßiger und berührungsästhetischer Ähnlichkeit mit Natursteinen, dadurch gekennzeichnet, daß ein Gemisch aus
15 bis 30 Gew.-% gegebenenfalls an- oder eingefärbtem, transparentem, härtbarem oder thermoplastisch verformbarem Kunstharz,
10 bis 80 Gew.-% weißem, grünem, braunem oder gemischtem, splitterförmigem und/oder granuliertem Altglas der Korngrößen 0,05 bis 3 mm,
0 bis 40 Gew.-% transparentem, opakem oder stark eingefärbtem splitterförmigem und/oder granuliertem Neuglas der Korngrößen 0,05 bis 3 mm,
0 bis 75 Gew.-% transparentem, opakem oder stark eingefärbtem Mahlgut der Korngrößen 0,5 bis 3 mm, hergestellt aus 80 bis 92 Gewichtsteilen Altglas der Korngröße 0,05 bis 0,3 mm und 8 bis 20 Gewichtsteilen härtbarem Kunstharz,
0 bis 35 Gew.-% anorganischen Füllstoffen aus der Gruppe Quarzsand, Quarzmehl, Steinmehl, natürliche oder synthetische, gemahlene und/oder granulierte Silikate der Korngrößen 0,05 bis 3 mm und
0 bis 0,5 Gew.-% Farbstoffe oder Farbpigmente
im Preß- oder Gießverfahren ausgeformt wird, und dabei die Oberfläche als Relief mit filigraner Struktur ausgebildet wird, welche Bruchsteinflächen und/oder Steinschnitzreliefs entspricht, oder daß die Oberfläche nachträglich mit einer adhäsivem Oberflächenfeinbeschichtung versehen wird, oder daß aus der Oberfläche nachträglich lösliche Bestandteile herausgelöst werden um einen porösen, verwittert wirkenden Eindruck zu erwecken.

Schließlich ist Gegenstand der Erfindung die Verwendung von erfindungsgemäßen Kunststeinen zur Herstellung von Reproduktionen von Kunstgegenständen, kunstgewerblichen Artikeln, Verpackungen für Luxusartikel, dekorativen Artikeln des täglichen Gebrauchs, Abdeckungen für elektrische Schalter und Steckdosen, für den Innenausbau von Wohn-, Verwaltungs-, Repräsentations- und gastronomischen Räumen, Küchen, Badezimmern, Schwimmbadauskleidungen sowie Zwischenprodukten für die Weiterverarbeitung durch Künstler, Kunsthandwerker und Heimwerker. Wegen der guten Adhäsion geeigneter Kunstharze auf Holz, Glas, Gasbeton und anderen Kunststoffen können die erfindungsgemäßen Kunststeine auch mit diesen Materialien verbunden werden.

Weiterhin ist es möglich, die erfindungsgemäßen Kunststeine mit einer witterungsbeständigen Schicht zu versehen. Daraus gefertigte Platten können auch für den Außenbau verwendet werden.

Wesentlicher Bestandteil der erfindungsgemäßen Kunststeine sind somit außer der härtbaren oder thermoplastisch verformbaren Kunstharzmasse vor allem gemahlenes und/oder granuliertes Altglas. Dieses steht in ausreichenden Mengen zur Verfügung und kann nach dem erfindungsgemäßen Verfahren umweltfreundlich und ohne Einsatz großer Energiemengen sinnvoll wiederverwendet werden. Durch die Verwendung der härtbaren oder thermoplastisch verformbaren Kunstharze ist es möglich, die Kunststeine im Guß- oder Preßverfahren zu verarbeiten und dabei bezüglich der Oberflächenstruktur Natursteinen sehr viel ähnlicher zu machen als alle bisher bekannten Kunststeine. Es können erfindungsgemäß auch äußerst feine filigranartige Strukturen repräsentiert werden, die sowohl natürlichen Steinbruchflächen als auch Steinschnitzreliefs entsprechen. Das transparente, opake, stark eingefärbte splitterförmige oder granulierte Neuglas wird nur in dem Maße eingesetzt, wie es zur Erzielung besonderer Effekte notwendig ist. Die gewünschtenfalls zugesetzten anorganischen Füllstoffe aus der Gruppe Quarzsand, Quarzmehl, Steinmehl, natürliche oder synthetische, gemahlene oder granulierte Silikate stehen im allgemeinen auch in großen Mengen und preiswert zur Verfügung, so daß die Rohstoffkosten für die erfindungsgemäßen Kunststeine vor allem von den Kosten des eingesetzten Kunstharzes abhängen.

Als Kunstharze kommen für das Preßverfahren beispielsweise thermoplastisch verformbare, transparente Kunstharze in Frage. Ein Nachteil der verformbaren, transparenten Kunstharze ist, daß die aus ihnen hergestellten Kunststeine bei stärkerer Erhitzung sich wieder verformen können. Es werden daher bevorzugterweise Kunstharze eingesetzt, die härtbar sind und daher auch bei Erwärmung ihre Form behalten. Selbstverständlich endet die thermische Belastbarkeit der Kunststeine stets bei solchen Temperaturen, bei denen die Kunstharze thermisch zersetzt werden. In dieser Hinsicht sind die erfindungsgemäßen Kunststeine mit den nachgeahmten natürlichen Steinen nicht vergleichbar. Für die vorgesehenen Verwendungszwecke ist dies jedoch im allgemeinen ohne Bedeutung. Dabei ist zu beachten, daß auch einige der für künstlerische Zwecke verwendeten Natursteine, wie Marmor und Alabaster, thermisch nicht sehr belastbar sind.

Als härtbare Kunstharze, die sich ausgezeichnet im Gußverfahren verarbeiten lassen, werden daher Epoxyharze und Polyesterharze eingesetzt. In den meisten Fällen liegt der Gehalt an Kunstharz im Bereich von 20 Gew.-%, jedoch kann die Menge des Kunstharzes in Abhängigkeit vom gewünschten tastästhetischen Effekt, der geforderten mechanischen Stabilität und der besonderen Zusammensetzung der Füllstoffe in dem breiten Bereich von 15 - 30 Gew.-% variiert werden.

Um eine adhäsive Oberflächenfeinbeschichtung nachträglich aufzutragen, werden die fertig gepreßten oder gegossenen Kunststeine mit einem geeigneten organischen Lösungsmittel, wie Aceton oder Alkohol, fein besprüht und dann mit Glasmehl und/oder Steinmehl der Korngröße von weniger als 0,1 mm bepudert. Bei Verwendung von weitgehend chemikalienresistenten UP-Harztypen muß dieser Vorgang in einem Stadium erfolgen, in dem das Kunstharz noch nicht vollständig ausgehärtet ist. Nach dem Abklingen der klebrigen Phase wird das überschüssige bzw. schwach an die Oberfläche gebundene Glas oder Steinmehl durch Drucklufteinwirkung entfernt. Bei Verwendung von splitterförmigem Glasmehl erhält das Material auf diese Weise eine optisch und tastästhetisch wahrnehmbare kristallartige Oberflächenfeinstruktur, die das Material sehr edel erscheinen läßt. Um der Oberfläche nachträglich eine poröse und verwittert wirkende Struktur zu verleihen, werden zunächst die Oberflächen der Gußform mit einem wasserlöslichen Klebstoff fein besprüht. Sodann werden auf diese adhäsiv Kristalle oder Granulatkörner eines wasserlöslichen Stoffes wie Salz oder Zucker gelegt, wobei diese Kristalle oder Körner noch mit Pigment in geeigneten Farbtönen vorliegen können. Nach dem Eingießen der Grundsteinmasse in die Form und Aushärten werden die wasserlöslichen Kristalle oder Körner mit Wasser, vorzugsweise einem Wasserstrahl, herausglöst, wobei der zu Brei gemischte Farbstoff oder das Farbpigment teilweise am Kunstharz haften bleibt.

Das Ergebnis ist eine ungleichmäßig poröse, in manchem Ton farblich abgesetzte, in ihrem Gesamteindruck verwittert wirkende Oberfläche des Kunststeines. Weitere reizvolle Oberflächeneffekte können dadurch erzielt werden, daß man die wasserlöslichen Partikel nicht rasch herauswäscht, sondern in feuchter Atmosphäre langsam zum Ausblühen bringt und erst dann vollständig entfernt. Auch hierbei entstehen Oberflächenstrukturen, wie sie bei natürlichen Steinen häufiger beobachtet werden.

Ein wesentliches Charakteristikum der Erfindung ist somit, daß durch die Gestaltung der Oberfläche erstmals sowohl die Fein- als auch die Grobstrukturen so unterschiedlicher Gesteinsarten wie Marmor, Alabaster, Jade, Onyx, Granit, Basalt, Sandstein, Buntsandstein oder Schiefer äußerst naturgetreu nachgebildet werden können.

Der optische Gesamteindruck einer natürlichen Gesteinsoberfläche ergibt sich nämlich aus den optischen Einzelinformationen über die im folgenden genannten Faktoren, die es beim reproduzierten Stein nachzuvollziehen gilt:

### a) Korngröße

Jeder der genannten Steine läßt bei genauer Betrachtung seinen Aufbau aus einer Vielzahl von Körnern bzw. Kristallen erkennen. Diese können wie beim Schiefer äußerst fein oder wie beim Granit recht grob sein. Sie können wie beim von Quarzadern durchzogenen Marmor auch unterschiedliche Größen haben.

Durch das Vermahlen von Altglasscherben zu entsprechenden Siebfraktionen (in der Regel in der Bandbreite von 0,1 bis 3 mm) lassen sich Glaspartikel in den erforderlichen Größen herstellen. In ihrer Form unterscheiden sich diese kaum von entsprechenden Steinpartikeln.

### b) Transluzenz/Opazität

Die verschiedenen Gesteinsarten unterscheiden sich im Partikelbereich hinsichtlich ihrer Transluzenz. Während Schiefer, Basalt und - ohne Mikroskop betrachtet - auch Sandstein absolut opak wirken, ist z.B. bei etlichen Granitsorten zu beobachten, daß ein Teil der Körner opalartig lichtdurchlässig ist. Für Jade, Onyx und Alabaster ist eine gewisse Lichtdurchlässigkeit sogar charakteristisch.

Beim Kunststein aus - in aller Regel transparentem - Altglas läßt sich jeder gewünschte Transluzenzgrad bis hin zum völlig opaken Material dadurch bewerkstelligen, daß dem Bindemittel entsprechende Mengen opakisierender Pigmente zugemischt werden.

### c) Farbe

Bei der farblichen Betrachtung von Steinen muß zwischen dem Gesamteindruck, der Farbkomposition im Grobstrukturbereich und der im Feinstrukturbereich unterschieden werden. Letzterer ist für die Herstellung natursteinähnlicher Kunststeine aus Altglas von entscheidender Bedeutung.

Die Farbkomposition im Feinstrukturbereich kann beliebig gesteuert werden. Dies geschieht durch eine gezielte Abstimmung:
- des Mischverhältnisses und der Anordnung zwischen farblosen und/oder grünen und/oder braunen Altglaspartikeln sowie ggf. Neuglas- oder vorzugsweise Mahlgut-Partikeln mit:
- der Pigmentierung des Bindemittels und ggf.: der pastellierenden Zugabe von kleineren Mengen Steinmehl, Quarzmehl oder Quarzsand.

So werden z.B. bei einer Jade-Reproduktion logischerweise farblose und grüne, beim Onyx farblose und braune Altglaspartikel die Hauptbestandteile sein, während die Pigmentierung des Bindemittels der Farbkorrektur und ggf. Opakisierung dient.

### d) Gesteinsstruktur

Hier ist zwischen dem einheitlichen Korngefüge (z.B. beim Schiefer), der homogenen Kornmischung (Sandstein), der ungleichmäßigen Kornmischung bzw. -verteilung (Granit), der Fleck- und Fließmarmorierung (Marmor), der Ader- und Schlierenstruktur (Marmor, Alabaster) und der Schichtenstruktur (Buntsandstein, Onyx) zu differenzieren, wobei auch verschiedene dieser Strukturtypen zugleich bei ein- und derselben Gesteinsart auftreten können.

Eine natursteinorientierte Gesteinsreproduktion muß solche Strukturen nicht nur in farblicher Hinsicht nachbilden, sie muß auch die strukturellen Unterschiede hinsichtlich Korngrößengefüge und punktuell oder partiell auftretender Transluzenz bzw. Opazität berücksichtigen.

Bei der erfindungsgemäßen Kunststeinerzeugung aus Altglas wird diesen Erfordernissen in den verschiedenen Produktionsphasen Rechnung getragen:
- bei der gezielten Komposition von hinsichtlich Korngröße, Farbe und Transluzenz/Opazität u.U. deutlich differierenden Altglas- und sonstigen Füllstoffpartikeln,
- bei ihrer Vermengung mit dem hinsichtlich Farbe und Transluzenz/Opazität gezielt pigmentierten Bindemittel zu gießfähigen Gemischen,
- beim anschließenden gleich- oder ungleichteiligen und ggf. unvollständigen Mischen zweier oder mehrerer Gemische zu sog. Gemischkombinationen,
- durch die Mechanik der simultanen und/oder alternierenden und/oder positionswechselnden Eingabe zweier oder mehrerer Gemischkombinationen in die Gießform.

In einer automatisierten kontinuierlichen Fertigung von Kunststeinplatten oder sonstigen -formteilen sind die Materialmisch- und Eingabesysteme in ihrer Anordnung und Mechanik so zu konstruieren, daß die strukturellen Charakteristika der verschiedenen Gesteinsarten äußerst naturgetreu reproduziert werden können.

### e) Oberflächenstruktur

Vom Steinmetz bearbeitete Natursteine weisen traditionell entweder eine bruchrauhe, eine geschliffene, ggf. auch polierte oder eine mit Steinschnitzreliefs versehene Oberflächenstruktur auf. Infolge der hervorragenden Formbarkeitseigenschaften des erfindungsgemäßen Kunststeinmaterials können alle diese Strukturen auf dem Wege der Abformung von Naturstein-Originalen perfekt nachgebildet werden.

Die Frage, ob die eigentliche Kunststeinformung im Gieß- oder Preßverfahren erfolgen soll, hängt von dem Umständen ab. Sie ist insbesondere im Hinblick auf die beanspruchte naturgetreue Nachbildung von Naturstein-Materialstrukturen von erheblicher Bedeutung. Auch die Herstellkosten spielen eine Rolle. Ein mit relativ hohem Druck erfolgendes Pressen - z.B. auf einer Stanzpresse - bietet den Vorteil, daß mit sehr hohem Füllstoff- und entsprechend niedrigem Bindemittelanteil gearbeitet werden kann. Die zu pressende Masse wird hierbei in klumpigem, teilweise noch trocken pulverförmigem Zustand in die Preßform eingegeben. Der hohe Preßdruck sorgt dann für eine gleichmäßige Verteilung des Bindemittels zwischen den Füllstoffpartikeln. Bei der Herstellung des oben erwähnten Mahlguts als einem Material mit sehr feinkörniger, homogener Struktur wird man vorteilhaft ein solches Preßverfahren anwenden.

Für die Herstellung von sehr natursteinähnlichen Kunststeinen ist dieses Verfahren jedoch weniger geeignet: Es bietet wegen des halbtrockenen Zustandes der Preßmasse bei der Einformung keine ausreichende Möglichkeit, differenzierte Gesteinsstrukturen wie Schlieren, Schattierungen, Marmorierung, Aderung oder Schichtenaufbau nachzuvollziehen. Allenfalls unregelmäßige Fleckenstrukturen sind erzielbar. Zum anderen kann bei einem solchen Preßverfahren nur mit sehr teuren metallischen Formwerkzeugen gearbeitet werden. Die Möglichkeiten, die Oberflächenstrukturen der Kunststeine vielfältig zu variieren, wären aus Kostengründen erheblich eingeschränkt. Dieser Umstand würde zu einer natursteinfremden Uniformität der Oberflächengestaltung führen.

Beim Gießverfahren werden die Kunstharz-Füllstoff-Gemische in noch gießfähigem, zähflüssigem Zustand in die Form eingegeben. Hierbei können mehrere hinsichtlich Korngrößenzusammensetzung, Transluzenz/Opazität und farblicher Abstimmung sich unterscheidende Gemische simultan und/oder alternierend kombiniert werden. Je nach Konstruktion, Bewegungsrichtung und Arbeitsrhythmus (bzw. -arhythmus) der die Kombination der Gemische bewirkenden mechanischen Vorrichtungen können hierbei natürliche Gesteinsstrukturen wie Schlieren, Marmorierung, Schattierung oder Schichtung nachgeahmt werden. Darüber hinaus lassen sich z.B. durch unregelmäßiges Aufsprühen eines farbkontrastierenden dünnflüssigen Gemisches auf die Oberflächen zweier zähfließender, sich kurz vor dem Auftreffen auf die Form zu einem Gießstrang vereinigender Gießstränge sehr natursteinähnliche Aderstrukturen erzielen.

Eine Grundvoraussetzung für ein derartiges Strukturgestaltungspotential ist allerdings die ausreichende Fließfähigkeit der eingesetzten Gießmassen. Diese wird beispielsweise durch die Verwendung eines sehr niedrigviskosen UP-Harzes als Bindemittel erreicht, oder aber auch durch den bewußten vorläufigen Verzicht auf eine größtmögliche Füllstoffsättigung der Gießmasse. Durch diesen Umstand wird auch die Entlüftung der in der Matrize eingeformten Gießmasse, d.h. die - ggf. durch eine Vibrationsvorrichtung zu unterstützende - Befreiung von eingerührten oder an der Matrizenoberfläche gefangenen Luftblasen erleichtert.

Infolge des deutlich höheren spezifischen Gewichtes des Füllstoffes gegenüber dem des Bindemittels tritt eine - ggf. durch Vibration noch unterstützte - Verdichtung des Füllstoffes ein. Die Füllstoffpartikel setzen sich nach unten ab, wodurch sich im unteren Bereich der Form eine wesentlich höhere Füllstoffsättigung ergibt als im oberen.

In einem solchen Zustand sollte das Material nicht belassen werden, denn niedriggefüllte Reaktionsharze erfahren bei der Härtung eine erheblich höhere Volumensreduktion (Schrumpfung) als hochgefüllte. Unzulässige Spannungen im Verbundmaterial wären die Folge und würden z.B.bei plattenförmigen Gießlingen Wölbungsverformungen herbeiführen. Aus diesem Grunde ist es meist erforderlich, den niedriggefüllten oberen Bereich der Gießmasse vor dem Eintritt in die Gelierphase mit trockenem Füllstoff aufzufüllen. Dies geschieht am besten durch gleichmäßiges Einstreuen von Altglassplittern mit mindestens 1 mm Korngröße. Zur schnellen Überwindung der Oberflächenspannung der Gießmasse sollte das Material aus ausreichender Höhe eingestreut werden. Durch gleichzeitiges Rütteln der Matrize vermittels einer Vibrationsvorrichtung wird die Verdichtung des eingestreuten Füllstoffes unterstützt. Der Einstreuprozeß ist so lange fortzusetzen, bis die Gießmasse so weit mit Einstreugut aufgefüllt ist, daß dieses nicht mehr absinken kann und sich eine trockene Oberfläche aus Glaspartikeln bildet, die nur etwa zur Hälfte in das Bindemittel eingebettet sind.

Durch die Kombination des Gießverfahrens mit dem anschließenden Auffüllen durch Einstreuen von zusätzlichem Füllstoff läßt sich ein Füllstoffsättigungsgrad von bis zu 85 Gew.-% problemlos erzielen.

Aufgrund der vorteilhaften optischen und Gebrauchseigenschaften des erfindungsgemäßen Kunststeinmaterials sowie der niedrigen Rohmaterial- und Energiekosten kommt der Massenfertigung von plattenförmigen Bauelementen aus diesem Material besondere kommerzielle Bedeutung zu. Hierunter fallen Fußbodenplatten und -fliesen, Wand- und Schwimmbadfliesen, Fensterbänke für innen und außen, Fassadenplatten, Klinker- und Mauerstein-Paneele sowie Tisch-, Theken- und Arbeitsplatten. Solche plattenförmigen Bauelemente lassen sich im großtechnischen Maßstab vorteilhaft auf einer kontinuierlich arbeitenden und vollautomatisierbaren Endlos-Formband-Anlage herstellen.

Hierbei wird die - in der Regel aus unterschiedlichen Gemischen kombinierte - aus Füllstoffen, Bindemittel und Farbstoffen bestehende Gießmasse auf ein endlos laufendes Förderband aufgebracht, welches zugleich als Formwerkzeug bzw. Gießmatrize dient. Die Oberfläche dieses Bandes ist also im Negativ entsprechend der gewünschten Oberflächenstruktur der Kunststeinplatte strukturiert. Die Länge und Fördergeschwindigkeit des umlaufenden Formbandes ist auf die Reaktionszeit des als Bindemittel eingesetzten und durch entsprechend dosierte Härter-, Beschleuniger- und Inhibitor-Zugabe auf die gewünschte Reaktionskurve eingestellten UP-Harzes abzustimmen. Durch Einbeziehung eines Wärmetunnels in die Bandanlage läßt sich der Härtungsprozeß beschleunigen und somit die erforderliche Länge der Bandanlage verkürzen. Bei einer Vorschubgeschwindigkeit des Bandes von 2 m/min und dem Einsatz von hochreaktivem UP-Harz als Bindemittel kann eine Arbeitsstrecke von ca. 60 m zwischen Einformung und Entformung als Richtwert zugrunde gelegt werden. Die Entformung, d.h. die Trennung des durch Polymerisation verfestigten Kunststeins vom Formband erfolgt, sobald der Kunststein die hierfür erforderliche Formstabilität erreicht hat. Unmittelbar nach der Entformung wird das Kunststeinband zu großen Platten geschnitten. Zur vollständigen Aushärtung werden diese sodann einem Nachhärtungslager mit erhöhter Lufttemperatur zugeführt. Die vollständig ausgehärteten Großplatten können anschließend auf die jeweils gewünschten Formate gesägt werden.

Bei einer solchen Anlage zur Erzeugung von sehr natursteinähnlichen Kunststeinplatten sind die im folgenden angesprochenen Kriterien bzw. Komponenten von besonderer Bedeutung und somit in ihrer Gesamtheit erfindungsrelevant:

### a) Die Mischung der Materialkomponenten

Das Materialmischsystem verbindet das Prinzip der Chargenmischung mit dem der kontinuierlichen Durchlaufmischung. In der Phase der Chargenmischung wird auf der Kunstharzseite zunächst ein niedrigviskoses UP-Harz (z.B. Vestopal^{(R)}155) mit einem geeigneten Reaktionsbeschleuniger (z.B. Kobaltlösung in Styrol) vorbeschleunigt. Falls zur Beeinflussung der späteren Verarbeitungs- und Härtungsdauer erforderlich, kann schon jetzt auch tert.-Butyl-catechol als Inhibitor zugesetzt werden. Das so vorbeschleunigte und ggf. mit Inhibitorzusatz versehene UP-Harz hat bei Raumtemperatur eine Gebrauchsdauer von mehreren Wochen. Auf der Füllstoffseite werden zunächst eine oder in der Regel mehrere verschiedene Füllstoffkombinationen aus Altglaspartikeln unterschiedlicher Korngröße und Farbe sowie ggf. auch Neuglas- oder vorzugsweise Mahlgut-Partikeln unterschiedlicher Korngröße, Farbe und Transluzenz/Opazität sowie ggf. Steinmehl, Quarzmehl oder Quarzsand zusammengestellt. Diese Füllstoffkombinationen werden sodann in getrennten Mischbehältern mit dem vorbeschleunigten und ggf. mit Inhibitorzusatz versehenen UP-Harz vermengt. Die nunmehr gebildeten fließfähigen Gemische werden anschließend als Ganzes oder in Teilmengen in sog. Einfärbungsmischer überführt. In diesen werden in Styrol gelöste Pigmente in den gewünschten Farbtönen und erforderlichen Dosierungen eingemischt.

Es folgt der Übergang in die kontinuierliche Mischphase. Die eingefärbten Gemische werden in gesteuerten Durchflußmengen aus den Einfärbungsbehältern abgezogen und Durchlaufmischern zugeführt. In diesen wird der reaktionsauslösende Härter (z.B. Methylethylketonperoxid) in erforderlicher Dosierung zugemischt. Die Gebrauchsdauer der Gemische beträgt ab diesem Vorgang nur noch wenige Minuten. Die Gemische gelangen jetzt vereinigt oder zu Gruppen zusammengefaßt in einen oder mehrere sog. Strukturmischer, in denen sie durch geeignete Mechaniken zu den gewünschten naturstein-orientierten Struktureffekten kombiniert werden. Beim Einsatz zweier oder mehrerer Strukturmischer erfolgt die Endvereinigung der vorkombinierten Gemische in einer - wiederum mit einer Marmorierungsmechanik ausgestatteten Trichterwanne. Von hier aus wird das Material direkt auf das Formband aufgebracht bzw. aufgerakelt.

### b) Das Material des Formbandes

In der herkömmlichen Polymerbeton- und Polymerkunststeintechnik finden allgemein folgende Formmaterialien Verwendung:
Bei Verarbeitung im Warmpreßverfahren: Stahl
Bei Verarbeitung im Gießverfahren: Kunststoffplatten wie Resopal^{(R)}, Hornitex^{(R)}, Formica^{(R)}, Preßplatten, gehobelte Bretter, Aluminium oder Stahlblech mit glatter Oberfläche oder Formen aus glasfaserverstärktem gehärtetem Polyester. Gießformen aus allen diesen Materialien müssen vor dem Eingießen mit einem geeigneten Trennmittel vorbehandelt werden.

Für die erfindungsgemäße kontinuierliche Fertigung von sehr natursteinähnlichen Kunststeinplatten auf einer Endlos-Formbandanlage sind die genannten Materialien ungeeignet. Hier ist vielmehr ein flexibles Material gefordert, das auf ein umlaufendes Stahlband aufgespannt werden kann. Das Material muß ferner die perfekte Abformung u.U. äußerst filigraner Naturstein-Oberflächenstrukturen oder auch Steinschnitzreliefs gewährleisten und es soll eine Vorbehandlung mit Trennmitteln überflüssig machen. Ein solches Material gibt es, nämlich bestimmte, in jüngster Zeit entwickelte Siliconkautschuktypen (z.B. Wacker RTV-2 Siliconkautschuk VP 7524 oder RTV-M 531 bzw. der derzeit noch nicht auf dem Markt befindliche, verbesserte Nachfolgertyp) erfüllen die sich aus dem vorliegenden Einsatzzweck ergebenden Anforderungen und weisen insbesondere eine erhöhte Polyesterresistenz auf. Ihre Einsatzfähigkeit wird durch den Umstand begünstigt, daß die während der Polymerisation auftretende Reaktionsaggressivität bei mit Glaspartikeln hochgefüllten UP-Harzen erheblich geringer ist als bei ungefüllten UP-Harzen. Während der reaktionsbedingte Temperaturanstieg ungefüllter UP-Harze zu Materialtemperaturen von bis zu 150°C führen kann, wurde bei der Erzeugung des erfindungsgemäßen Kunststeinmaterials nur ein Temperaturanstieg auf 30 bis 35°C beobachtet. Die Herstellung von Formbändern aus Siliconkautschuk ist unkompliziert. Hierbei werden von einem plattenförmigen Natursteinmodell (z.B. im Format 2 x 2 m) Negativabgüsse aus Siliconkautschuk in erforderlicher Anzahl hergestellt. Nach ihrer Vulkanisation werden diese Formglieder mit einem geeigneten vulkanisierenden Kleber (z.B. Elastosil^{(R)}) zu einem geschlossenen Endlosband in der erforderlichen Länge verklebt. Die Rückseite dieses Bandes wird durch Aufvulkanisieren eines Trägergewebes verstärkt. Ein solches Formband gewährleistet eine Standzeit von mindestens 1000 Abformungen.

### c) Beeinflussung der Oberflächeneigenschaften

Je nach Verwendungszweck werden von den herzustellenden natursteinähnlichen Kunststeinplatten bestimmte Oberflächeneigenschaften gefordert, z.B. erhöhte Abrieb- und Kratzfestigkeit bei Fußbodenfliesen und Arbeitsplatten, Witterungsbeständigkeit bei Fassadenplatten, Chemikalienresistenz bei Schwimmbadfliesen, schmutzabweisende Eigenschaften bei Wandfliesen etc. Da als Bindemittel für das Kunststeinmaterial in der Regel ein kostengünstiger Standard-UP-Harztyp Verwendung finden soll, muß davon ausgegangen werden, daß die plattenförmigen Kunststeine in einzelnen Fällen mit einer Feinschicht zu versehen sind, die die jeweils geforderten Oberflächeneigenschaften gezielt aufweist. Solche Feinschichten können auf einem gezielt eingestellten oder ausgerüsteten UP-Harzsystem basieren. Grundsäztlich möglich ist aber auch die Verwendung geeigneter Polyurethan-Systeme oder anderer synthetischer Beschichtungsstoffe.

Der Auftrag einer (in der Regel zwischen 0,2 und 0,4 mm starken) Feinschicht wird sinnvollerweise nicht nach der Ausformung der vorgehärteten Platten sondern als sog. "in-mould-coat" vor der Einformung der eigentlichen Gießmasse erfolgen. Hierbei wird die Feinschicht unmittelbar am Anfang des umlaufenden Formbandes auf die Siliconkautschukmatrize aufgesprüht. Zur Erzielung bestimmter optischer und haptischer Effekte kann in den Sprühstrahl gleichzeitig sehr feines Altglaspulver eingeblasen werden. Auf diese Weise läßt sich auch die Oberflächenhärte und Abriebfestigkeit verstärken. Sollte die Viskosität des - möglichst lösungsmittelfreien - Feinschicht-Harzes ein Aufsprühen unmöglich machen, kann das - ggf. mit Altglaspulver verstärkte - Feinschicht-Harz auch aufgerakelt bzw. aufgewalzt werden. Um nicht zu viel Strecke des Fertigungsbandes für die Feinbeschichtung zu opfern, ist das Feinschichtmaterial auf möglichst schnellen Reaktionseintritt einzustellen, wobei die Gelierung ggf. durch Wärmeeinwirkung beschleunigt herbeigeführt werden kann. Nach dem Einsetzen der Gelierung kann die den eigentlichen Kunststein bildende Gießmasse aufgerakelt werden.

### d) Kombination mit anderen Materialien

Das erfindungsgemäße Kunststeinmaterial ist sehr kombinationsfreudig. Ausgehärtete Kunststeinplatten können problemlos und dauerhaft mit Hilfe geeigneter Klebstoffe oder Klebemörtel mit Beton, Stein, Holz, Metall, keramischen Werkstoffen u.a. verbunden werden. Für bestimmte Anwendungen kann es von Vorteil sein, die Kombination mit anderen Materialien bereits in die Fertigung der plattenförmigen Kunststeine zu integrieren. So lassen sich z.B. Wandpaneele mit wärmedämmender Eigenschaft vorteilhaft auf der beschriebenen Endlos-Formbandanlage herstellen. In diesem Falle wird auf ein vollständiges Auffüllen der nach unten füllstoffverdichteten Gießmasse durch Altglaseinstreuung verzichtet. Statt dessen wird eine 2-3 mm starke niedriggefüllte Materialschicht auf der Oberseite (= Plattenrückseite) belassen. In diese nasse Schicht werden nun geeignete Leichtbauplatten (Heraklith^{(R)}) oder abgewickelte Glaswolle-Matten (Isover^{(R)}) eingelassen bzw. mit geringem Druck aufgepreßt. Das niedriggefüllte Reaktionsharz dringt hierbei in die Öffnungen und Poren der Platten bzw. Matten ein. Nach erfolgter Polymerisation sind die Materialien untrennbar miteinander verbunden.

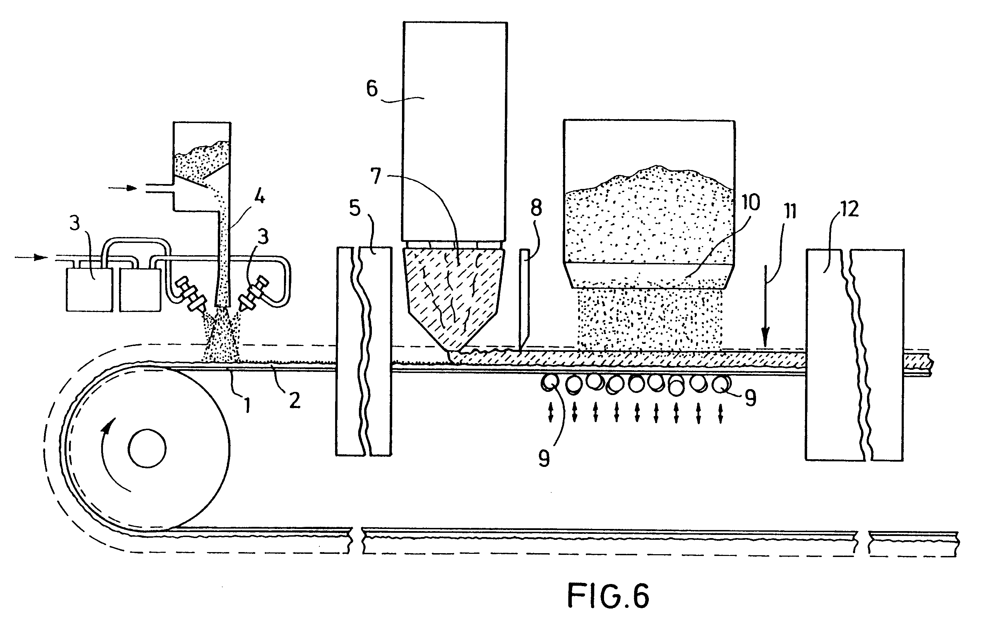

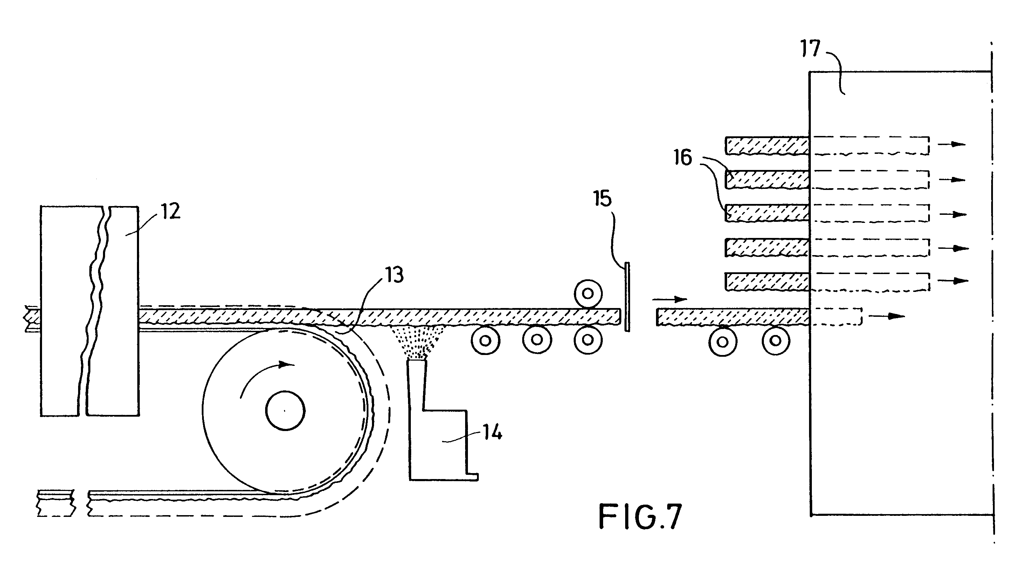

Die beigefügten Figuren 6 und 7 zeigen in vereinfachter Darstellung den Aufbau einer Endlos-Formbandanlage zur Herstellung von sehr natursteinähnlichen Kunststeinplatten aus Altglas.
Die Ziffern bezeichnen folgende Teile der Anlage:
- 1: umlaufendes Stahlband
- 2: aufgespanntes Siliconkautschuk-Formband mit rückseitiger Gewebeverstärkung
- 3: Sprühvorrichtung mit externer Härterzugabe für Oberflächenfeinschicht
- 4: luftstromgeführte Glaspulverzugabe
- 5: Wärmetunnel zur Feinschicht-Reaktionsbeschleunigung
- 6: Gießmassengemisch- und Kombinationsanlage
- 7: Trichterwanne
- 8: Rakel bzw. Rakelsystem
- 9: Rüttelstrecke zur Entlüftung und Füllstoffverdichtung
- 10: Einstreuvorrichtung zur Füllstoff-Auffüllung
- 11: Position für evtl. Kombination mit Leichtbauplatten oder Glaswolle-Matten
- 12: Wärmetunnel zur Beschleunigung der Härtung
- 13: selbsttätige Entformung
- 14: adhäsive Oberflächenfeinbeschichtung mit trockenem Stein- oder Altglasmehl
- 15: Schneidvorrichtung
- 16: belüftete Regalstapelung
- 17: Nachhärtung im Wärmelager
Die nachfolgenden Beispiele sind einige typische Kunststeine, und das Verfahren zu ihrer Herstellung nebst ihrer Verwendung wird näher erläutert.

### Beispiel 1: Granit

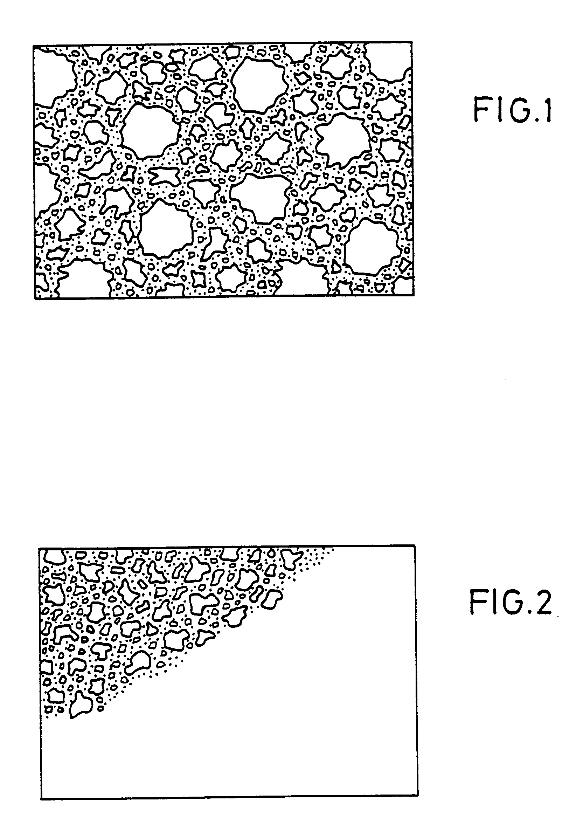

Um einen grünlich/grauen Granit zu imitieren, wird ein Gemisch aus anthrazitgrauen opaken Glassplittern der Korngrößen < 0,5 mm einerseits, 0,5 bis 1,0 mm sowie vereinzelten Körnern der Größe 1,0 bis 2,4 mm gemischt mit mittelgrauen, opaken Glassplittern der Körngrößen < 0,5 mm sowie 0,5 bis 1,0 mm. Schließlich werden Glassplitter aus grünem Flaschenglas und in den Korngrößen < 0,25 mm und < 0,5 mm eingesetzt. Weiter zugesetzt werden Glassplitter aus farblosem Flaschenglas in den Korngrößen < 0,5 mm bis 1 mm sowie einzelnen Körnern der Größenordnung 1,0 bis 2,4 mm. Es wird mit 20 % niedrigviskosem Reaktionsharz vermischt und gegossen. In der anliegenden Figur 1 ist schematisch der Aufbau des fertigen Kunststeines gezeigt, wobei durch die Bindemittelkomponente die Oberfläche geeignet ist, auch filigranartige Unebenheiten der Gußform wiederzugeben. Die Gußform kann u. U. hergestellt worden sein unter Verwendung eines Natursteines als Vorbild.

Nach dem Aushärten des gegossenen Objektes wird die Oberfläche mit etwas Aceton besprüht und dann Glasmehl der Korngröße < 0,1 mm bestreut, wobei sowohl farbloses und/oder grünes Flaschenglas verwendet werden kann. Nach dem Verdampfen des Lösungsmittels wird das überschüssige Glas mit einem Luftstrahl entfernt. Wie der Figur 1 zu entnehmen ist, weist dieser Kunststein, wie der natürliche Granit, eine teilweise recht grobe Körnigkeit aus. Deshalb ist dieses Material auch ähnlich wie natürlicher Granit nur von begrenzter Bruchstabilität und begrenzter mechanischer Belastbarkeit. Um diese mechanischen Eigenschaften zu verbessern, wird gegebenenfalls auf der Rückseite des fertigen Kunststeines eine zweite verstärkende Trägerschicht aufgegossen, die kein gröber körniges Material enthält und gegebenenfalls durch Einbau von Glasfasern eine extrem hohe Bruchfestigkeit aufweist. In dieser Trägerschicht wird ausschließlich das preiswerte Altglas eingesetzt.

### Beispiel 2: Sandstein

Um einen rötlich-ockerfarbenen Sandstein zu imitieren, werden ziegelrote opake Glassplitter der Korngrößen < 0,25 mm, < 0,5 mm und 0,5 bis 1 mm gemischt mit Glassplittern aus braunem Flaschenglas in den Korngrößen < 0,5 mm und 0,5 bis 1 mm, weiterhin mit Glassplittern aus farblosem Flaschenglas in den Korngrößen < 0,1 mm und < 0,25 mm und < 0,5 mm. Schließlich werden 20 % lichtdurchlässiges Reaktionsharz mit 0,2 % rötlich-ockerfarbenem Pigment versehen und das Gesamtgemisch, wie in Beispiel 1 beschrieben, gegossen. Wegen der relativen Kleinkörnigkeit und hohem Anteil an Altglas ist der erhaltene Kunststein mechanisch wesentlich stabiler und kann aus Preisgründen auch in größeren Stärken gegossen werden, so daß auf einen zweischichtigen Aufbau verzichtet werden kann. Der Aufbau dieses Kunststeines ist schematisch in der Figur 2 erläutert.

Da Sandsteinoberflächen in der Natur zur Verwitterung neigen, kann auch diesem Kunststein ein verwitterter Eindruck verliehen werden durch das vorherige Aufbringen von Kochsalzkörnern in die Gießform und anschließendem Auswaschen dieser Kochsalzkörner, wobei durch Aufbringen von pigmentiertem Salz noch besondere Schlierenbildungen erzeugt werden können.

### Beispiel 3: Schiefer

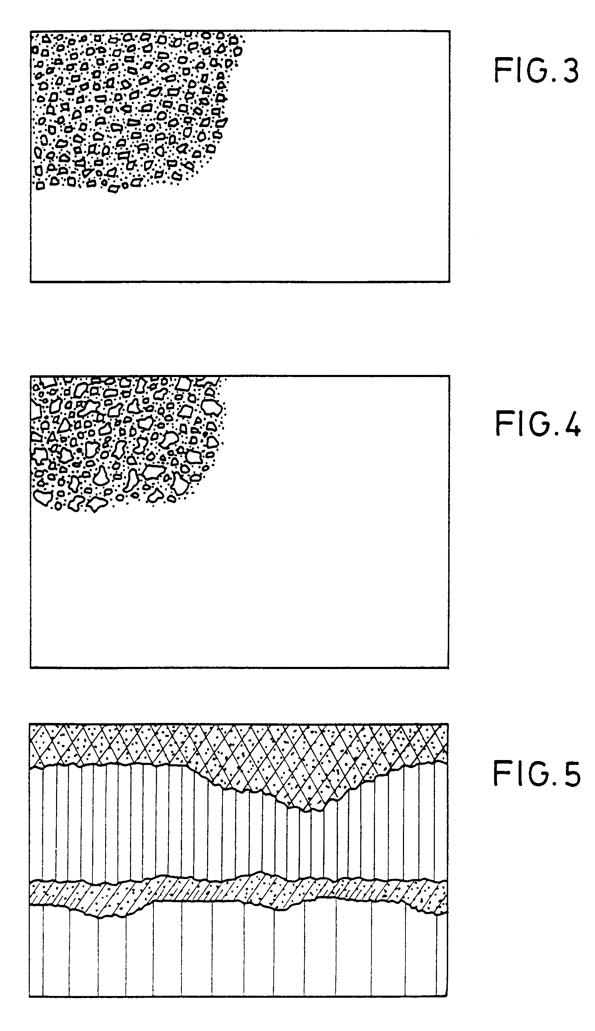

Um einen Schiefer zu imitieren, werden Glasmehl aus grünem Flaschenglas der Korngröße < 0,1 und < 0,25 mm mit Glasmehl aus braunem Flaschenglas der Korngrößen < 0,1 mm und < 0,25 mm mit einem intensiv anthrazitfarben-pigmentierten Kunstharz vermischt und gegossen. Um diesem Schiefer eine besonders naturgetreue Oberfläche zu verleihen, wird die Oberfläche wiederum mit etwas Aceton besprüht und mit Glasmehl der Korngröße < 0,1 bestreut und nach dem Abbinden mit Preßluft wieder weitgehend entfernt. Eine weitere Möglichkeit besteht darin, statt feinem Glasmehl natürliches Schiefermehl auf die Oberfläche aufzukleben. Der Aufbau ist schematisch in Figur 3 dargestellt.

### Beispiel 4: Lichtdurchlässiger Alabaster

Um einen grünlichen lichtduchlässigen Alabaster zu imitieren, werden Glassplitter aus grünem Flaschenglas in den Korngrößen < 0,1 mm, < 0,25 mm und < 0,5 mm mit Glassplittern aus grünem neuen "Alabasterglas" in der Korngröße < 0,1 mm sowie Glassplittern aus farblosem Flaschenglas in den Korngrößen < 0,1 bis 0,5 mm gemischt und ein leicht milchig pigmentiertes Kunstharz dazugegeben. Dieses Gemisch wird wie oben beschrieben gegossen. Je dünnwandiger ein Gegenstand aus einer solchen Mischung gestaltet ist, desto höher ist die Lichtdurchlässigkeit. Dickwandigere Gegenstände mit dennoch guter Lichtdurchlässigkeit werden erhalten durch zweischichtigen Aufbau. Hierbei wird zunächst die Dekorschicht wie oben beschrieben hergestellt und dann die Trägerschicht ausschließlich aus mit farblosen Flaschenglaspartikeln gebundenem und pigmentiertem, möglichst klarem Kunstharz hergestellt. Der Aufbau ist schematisch in Figur 4 dargestellt.

### Beispiel 5: Bernsteinfarbener Onyx mit geschichteter Struktur

Um ein derartiges Material zu imitieren, ist ein mehrschichtiger Aufbau notwendig. In der anliegenden Figur 5 ist dieser Aufbau gezeigt. Schicht 1 ist kaum lichtdurchlässig, cremefarben und weist eine relativ grobe Kornstruktur auf. Schicht 2 ist von mittlerer Lichtdurchlässigkeit, bernsteinfarben und weist keine mit bloßem Auge sichtbare Kornstruktur auf. Schicht 3 ist kaum lichtdurchlässig, grünlich cremefarben und weist in manchen Zonen eine grobe Kornstruktur mit erhöhter Lichtdurchlässigkeit auf. Schicht 4 ist sehr lichtdurchlässig, von heller Bernsteinfarbe und weist keine wahrnehmbare Kornstruktur auf. Diese Schichten werden wie oben beschrieben hergestellt und aufeinander gegossen. Es entsteht so ein sehr echt und wertvoll aussehendes Produkt, dessen Preis jedoch aufgrund der verschiedenen Arbeitsgänge höher liegt als ein einschichtiges Material.

### Beispiel 6: Dünnwandige, großformatige Platte aus grobkörnigem Buntgranit

Die optisch erkennbaren Korngrößen der Natursteinvorlage liegen zwischen 1 und 3 mm, die Kornfarben sind hellgrau, helles mittelgrau, grünlich sowie lapislazuliblau. Das Spektrum der Transluzenz/Opazitätsgrade reicht von opalartig transluzent bis völlig opak. Die grobstrukturelle Gesteinszeichnung ist großflächig marmoriert, wobei bei den ungleichmäßig verteilten Flecken und Schlieren manchmal mehr die eine, manchmal mehr eine andere Farbe dominiert.

### a) Herstellung eines Mahlguts

Es werden zunächst aus farblosem und grünen Altglasmehl in den Korngrößen 0,05 bis 0,3 mm unter Zugabe von Pigmenten zur Erzielung der gewünschten Farbtöne und Transluzenz/Opazitätsgrade Zwischenprodukte im Preßverfahren hergestellt: Als Bindemittel dient ungesättigtes Polyesterharz. Das Füllstoff-Bindemittel-Mengenverhältnis beträgt bei diesen gepreßten Vorprodukten 90 zu 10. Nach Aushärten werden die strangförmigen Vorprodukte in getrennten Farbchargen zu Mahlgut in den Korngrößen von 1 bis 3 mm vermahlen. Die Mahlgut-Farbchargen werden anschließend zu verschiedenen, hinsichtlich ihrer farblichen Mengenanteile variierenden Mahlgut-Mischchargen vermischt, so daß bei jeder dieser Mahlgut-Mischchargen jeweils einer der erwähnten Farbtöne mehr oder weniger dominiert.

### b) Herstellung des Endproduktes

Die oben beschriebenen Mischchargen werden im Endverhältnis 50 bis 65 Gew.-% Mahlgut mit 30 bis 15 Gew.-% farblosem Altglasmehl der Korngrößen 0,05 bis 0,5 mm sowie mit 20 Gew.-% niedrigviskosem, auf schnelle Härtung eingesetelltem UP-Harz vermischt. Diese Gemische werden mit Hilfe einer großflächig-ungleichmäßig marmorierenden Endmisch- bzw. Gießmechanik kombiniert und auf eine Gießmatrize aufgebracht bzw. aufgerakelt. Auf diese Weise ergibt sich eine zu ca. 80 % aus Altglas bestehende Buntgranit-Reproduktion, die hinsichtlich ihrer Gesteinsstruktur vom Natursteinoriginal kaum zu unterscheiden ist, jedoch wesentlich bessere Festigkeitseigenschaften aufweist als ein zur dünnwandigen Platte gesägter natürlicher Buntgranit der Dimensionen 1 m x 1 m x 0,006 m.

## Patentansprüche

1. Kunststeine aus feinteiligem Glasbruch und Kunstharzen, dadurch gekennzeichnet, daß sie große optische, gewichtsmäßige und berührungsästhetische Ähnlichkeit mit Natursteinen aufweisen, aus mehreren Komponenten bestehen, nämlich aus
15 bis 30 Gew.-% gegebenenfalls an- oder eingefärbtem, transparentem, gehärtetem oder thermoplastisch verformtem Kunstharz,
10 bis 80 Gew.-% grünem und/oder braunem und gegebenenfalls auch mit weißem, gemischtem, splitterförmigem und/oder granuliertem Altglas der Korngrößen 0,05 bis 3 mm, wobei stets ein Anteil an feinteiligem Altglas zum Einsatz kommt 0 bis 40 Gew.-% transparentem, opakem oder stark eingefärbtem splitterförmigem und/oder granuliertem Neuglas der Korngrößen 0,05 bis 3 mm,
0 bis 75 Gew.-% transparentem, opakem oder stark eingefärbtem Mahlgut der Korngrößen 0,5 bis 3 mm, hergestellt aus 80 bis 92 Gewichtsteilen Altglas der Korngröße 0,05 bis 0,3 mm und 8 bis 20 Gewichtsteilen härtbarem Kunstharz,
0 bis 35 Gew.-% anorganischen Füllstoffen aus der Gruppe Quarzsand, Quarzmehl, Steinmehl, natürliche oder synthetische, gemahlene und/oder granulierte Silikate der Korngrößen 0,05 bis 3 mm und
0 bis 0,5 Gew.-% Farbstoffe und/oder Farbpigmente, und wobei die Oberfläche im Preß- oder Gießverfahren als Relief mit filigraner Struktur ausgebildet ist, welche der Oberfläche von Bruchsteinflächen und/oder Steinschnitzreliefs entspricht, oder daß die Oberfläche eine nachträglich aufgebrachte adhäsive Oberflächenfeinbeschichtung aufweist, oder daß die Oberfläche eine nachträglich erzeugte poröse, verwittert wirkende Dekoroberfläche aufweist.

2. Kunststeine gemäß Anspruch 1, dadurch gekennzeichnet, daß sie aus mehreren, in der Zusammensetzung unterschiedlichen Schichten bestehen, die sich äußerlich und/oder bezüglich der mechanischen Stabilität unterscheiden.

3. Kunststeine gemäß Anspruch 2, dadurch gekennzeichnet, daß sie aus einer stabilen Trägerschicht und einer Dekorschicht bestehen.

4. Kunststeine gemäß Anspruch 2 oder 3, dadurch gekennzeichnet, daß die rückseitige und/oder innenseitige Oberfläche flach oder hohl ausgestaltet ist und gegebenenfalls durch Fasermaterial und/oder Metalldrahtmatten verstärkt ist.

5. Verfahren zur Herstellung von Kunststeinen aus feinteiligem Glasbruch und Kunstharzen mit großer optischer, gewichtsmäßiger und berührungsästhetischer Ähnlichkeit mit Natursteinen, dadurch gekennzeichnet, daß ein Gemisch hergestellt wird aus
15 bis 30 Gew.-% gegebenenfalls an- oder eingefärbtem, transparentem, härtbarem oder thermoplastisch verformbarem Kunstharz,
10 bis 80 Gew.-% grünem und/oder braunem und gegebenenfalls auch mit weißem, gemischtem, splitterförmigem und/oder granuliertem Altglas der Korngrößen 0,05 bis 3 mm,
0 bis 40 Gew.-% transparentem, opakem oder stark eingefärbtem splitterförmigem und/oder granuliertem Neuglas der Korngrößen 0,05 bis 3 mm,
0 bis 75 Gew.-% transparentem, opakem oder stark eingefärbtem Mahlgut der Korngrößen 0,5 bis 3 mm, hergestellt aus 80 bis 92 Gewichtsteilen Altglas der Korngröße 0,05 bis 0,3 mm und 8 bis 20 Gewichtsteilen härtbarem Kunstharz,
0 bis 35 Gew.-% anorganischen Füllstoffen aus der Gruppe Quarzsand, Quarzmehl, Steinmehl, natürliche oder synthetische, gemahlene und/oder granulierte Silikate der Korngrößen 0,05 bis 3 mm und
0 bis 0,5 Gew.-% Farbstoffe oder Farbpigmente, wobei stets ein gewisser Anteil an feinteiligem Altglas oder feinteiligen sonstigen Komponenten mit einer Korngröße von 0,05 bis 0,1 mm zum Einsatz kommen und wobei
im Preß- oder Gießverfahren ausgeformt wird, und dabei die Oberfläche als Relief mit filigraner Struktur ausgebildet wird, welche Bruchsteinflächen und/oder Steinschnitzreliefs entspricht, oder daß die Oberfläche nachträglich mit einer adhäsivem Oberflächenfeinbeschichtung versehen wird, oder daß aus der Oberfläche nachträglich lösliche Bestandteile herausgelöst werden um einen porösen, verwittert wirkenden Eindruck zu erwecken.

6. Verfahren gemäß Anspruch 5, dadurch gekennzeichnet, daß sie in zwei aufeinanderfolgenden Schritten aus äußerlich und/oder bezüglich der mechanischen Stabilität unterschiedlichen Schichten gegossen werden.

7. Verfahren gemäß Anspruch 6, dadurch gekennzeichnet, daß auf die Rückseite einer Dekorschicht eine stabile Trägerschicht aufgegossen wird.

8. Verfahren gemäß Anspruch 6 oder 7, dadurch gekennzeichnet, daß die Rückseite und/oder Innenseite flach oder hohl ausgestaltet wird und gegebenenfalls durch Fasermaterial und/oder Metalldrahtmatten verstärkt wird.

9. Verwendung von Kunststeinen gemäß einem der Ansprüche 1 bis 4 zur Herstellung von Reproduktionen von Kunstgegenständen, kunstgewerblichen Artikeln, Verpackungen für Luxusartikel, dekorativen Artikeln des täglichen Gebrauchs, Abdeckungen für elektrische Schalter und Steckdosen, für den Innenausbau von Wohn-, Verwaltungs-, Repräsentations- und gastronomischen Räumen, Küchen, Badezimmern, Schwimmbadauskleidungen sowie Zwischenprodukten für die Weiterverarbeitung durch Künstler, Kunsthandwerker und Heimwerker.

10. Verwendung von Kunststeinen gemäß einem der Ansprüche 1 bis 4 zur Herstellung von verwitterungsbeständig beschichteten Platten für den Außenbau.

## Claims

1. Artificial stones from finely divided glass fragments and artificial resins,
characterized in that they are of a great similarity to natural stones under optical, weight-related and touch-aesthetical aspects and that they consist of several components, namely of
from 15 to 30% by weight of a transparent cured or thermoplastically deformed synthetic resin which, if so desired, has been dyed superficially or in bulk,
from 10 to 80% by weight of green and/or brown fragmented and/or granulated waste glass, and optionally mixed with white fragmented and/or granulated waste glass, of the grain sizes of from 0.05 to 3 mm, while a proportion of finely divided waste glass is always used,
from 0 to 40% by weight of transparent, opaque or highly dyed fragmented and/or granulated new glass having grain sizes of from 0.05 to 3 mm,
from 0 to 75% by weight of transparent, opaque or highly dyed ground material having grain sizes of from 0.05 to 3 mm, produced from 80 to 92 parts by weight of waste glas having grain sizes of from 0.05 to 0.3 mm and from 8 to 20 parts by weight of curable synthetic resin,
from 0 to 35% by weight of inorganic fillers from the group of quartz sand, quartz meal, stone meal, natural or synthetic ground and/or granulated silicates having grain sizes from 0.05 to 3 mm, and
from 0 to 0.5% by weight of dyes and/or colored pigments, and whereby the surface has been shaped by means of a pressing or casting operation as a relief having a filigree structure, which corresponds to surfaces of rubble stones and/or stone-carved reliefs or
that the surface comprises a surface-adhesive fine coating as subsequently applied thereonto or
that the surface comprises a decorative surface cover which has been subsequently produced and is of a porous and weather-worn appearance.

2. The artificial stones according to claim 1,
characterized in that they consist of several layers which have different compositions and are distinguished in their appearance and/or with respect to the mechanical strength thereof.

3. The artificial stones according to claim 2,
characterized in that they consist of a stable support layer and a decoration layer.

4. The artificial stones according to claims 2 or 3,
characterized in that the reverse or inner surface has been provided with a flat or hollow shape and has optionally been reinforced by fiber material and/or metal wire-mesh webs.

5. A process for producing artificial stones from finely divided glass fragments and artificial resins which are of a great similarity to natural stones under optical, weight-related and touch-esthetical aspects, characterized in that a mixture comprising
from 15 to 30% by weight of a transparent curable or thermoplastically deformable synthetic resin which, if so desired, has been dyed superficially or in bulk,
from 10 to 80% by weight of white, green, brown or mixed fragmented and/or granulated waste glass of the grain sizes of from 0.05 to 3 mm,
from 0 to 40% by weight of transparent, opaque or highly dyed fragmented and/or granulated new glass having grain sizes of from 0.05 to 3 mm,
from 0 to 75% by weight of transparent, opaque or highly dyed ground material having grain sizes of from 0.05 to 3 mm, produced from 80 to 92 parts by weight of waste glas having grain sizes of from 0.05 to 0.3 mm and from 8 to 20 parts by weight of curable synthetic resin,
from 0 to 35% by weight of inorganic fillers from the group of quartz sand, quartz meal, stone meal, natural or synthetic ground and/or granulated silicates having grain sizes from 0.05 to 3 mm, and
from 0 to 0.5% by weight of dyes and/or colored pigments, is prepared and is shaped by means of a pressing or casting operation,
and that thereby the surface is shaped as a relief having a filigree structure, which corresponds to surfaces of rubble stones and/or stone-carved reliefs or
that the surface is subsequently provided with a surface-adhesive fine coating or
that soluble components are subsequently leached out from the surface to produce a porous and weather-worn appearance.

6. The process according to claim 5, characterized in that the artificial stones are cast in two steps in sequence wherein layers are cast which are distinguished in their appearance and/or with respect to the mechanical strength thereof.

7. The process according to claim 6, characterized in that a stable support layer is cast onto the reverse surface of a decorative layer.

8. The process according to claims 6 or 7, characterized in that the reverse and/or inner surface is provided with a flat or hollow shape and is optionally reinforced by fiber material and/or metal wire-mesh webs.

9. Use of artificial stones according to anyone of claims 1 to 4 for making reproductions of objets d'art, arts-and-crafts articles, packages for luxury goods, decorative articles of daily use, cover plates for electric switches and sockets, for the interior decoration of residential, administrative, representative and gastronomic places, kitchens, bathrooms, indoor swimming pool furnishing and intermediate products to be further processed by artists, art-craftsmen and do-it-yourselfers.

10. Use of artificial stones according to anyone of claims 1 to 4 for the manufacture of panels provided with a weather-resistant coating for outdoor construction work.

## Revendications

1. Pierres artificielles à base de verre broyé finement divisé et de résines synthétiques, caractérisées en ce qu'elles présentent une grande similitude avec des pierres naturelles, en ce qui concerne leur aspect, leur poids et leur esthétique de contact, et sont formées de plusieurs composants, à savoir :
de 15 à 30 % en poids d'une résine synthétique éventuellement teinté superficiellement ou en profondeur, transparente, durcie ou mise en forme de façon thermoplastique,
de 10 à 80 % en poids de verre de récupération vert et/ou marron et, éventuellement, aussi avec du verre blanc de récupération, mélangé, en forme d'éclats et/ou granulé, ayant une grosseur de grains de 0,05 à 3 mm, une certaine quantité de verre de récupération finement divisé étant toujours utilisée,
de 0 à 40 % en poids de verre neuf transparent, opaque ou fortement teinté, en forme d'éclats et/ou granulé, ayant une grosseur de grains de 0,05 à 3 mm,
de 0 à 75 % en poids d'une mouture transparente, opaque ou fortement teintée, ayant une grosseur de grains de 0,5 à 3 mm, fabriquée à partir de 80 à 92 parties en poids de verre de récupération ayant une grosseur de grains de 0,05 à 0,3 mm et de 8 à 20 parties en poids d'une résine synthétique durcissable,
de 0 à 35 % en poids de charges inorganiques choisies dans le groupe constitué par le sable siliceux, la poudre de quartz, la roche pulvérisée, des silicates naturels ou synthétiques, broyés et/ou granulés, ayant une grosseur de grains de 0,05 à 3 mm, et
de 0 à 0,5 % en poids de colorants et/ou de pigments colorés,
la surface des pierres étant réalisée, lors d'un processus de pressage ou de coulée, en forme de relief avec une structure en filigrane qui correspond à des surfaces de pierres de carrières et/ou à des reliefs de pierres taillées, ou en ce que ladite surface porte un mince revêtement adhésif , qui est appliqué a posteriori, ou en ce que ladite surface présente une surface décorative porcuse, produite a posteriori, produisant un effet d'altération due aux intempéries.

2. Pierres artificielles selon la revendication 1, caractérisées en ce qu'elles sont formées de plusieurs couches ayant des compositions différentes, qui se différencient extérieurement et/ou par leur stabilité mécanique.

3. Pierres artificielles selon la revendication 2, caractérisées en ce qu'elles sont formées d'une couche de support stable et d'une couche décorative.

4. Pierres artificielles selon la revendication 2 ou 3, caractérisées en ce que la surface arrière et/ou la surface interne a une forme plane ou creuse et est éventuellement renforcée par un matériau fibreux et/ou des nappes de fils métalliques.

5. Procédé de fabrication de pierres artificielles à base de verre broyé finement divisé et de résines synthétiques, ayant une grande similitude avec des pierres naturelles, en ce qui concerne leur aspect, leur poids et leur esthétique de contact, caractérisé en ce qu'on prépare un mélange composé de
15 à 30 % en poids d'une résine synthétique éventuellement teinté superficiellement ou en profondeur, transparente, durcie ou déformée de façon thermoplastique,
10 à 80 % en poids de verre de récupération vert et/ou marron et, éventuellement, aussi avec du verre blanc de récupération, mélangé, en forme d'éclats et/ou granulé, ayant une grosseur de grains de 0,05 à 3 mm,
0 à 40 % en poids de verre neuf transparent, opaque ou fortement teinté, en forme d'éclats et/ou granulé, ayant une grosseur de grains de 0,05 à 3 mm,
0 à 75 % en poids d'une mouture transparente, opaque ou fortement teintée, ayant une grosseur de grains de 0,5 à 3 mm, fabriquée à partir de 80 à 92 parties en poids de verre de récupération ayant une grosseur de grains de 0,05 à 0,3 mm et de 8 à 20 parties en poids d'une résine synthétique durcissable,
0 à 35 % en poids de charges inorganiques choisies dans le groupe constitué par le sable siliceux, la poudre de quartz, la roche pulvérisée, des sllicates naturels ou synthétiques, broyés et/ou granulés, ayant une grosseur de grains de 0,05 à 3 mm, et
0 à 0,5 % en poids de colorants et/ou de pigments colorés, une certaine quantité de verre de récupération finement divisé ou d'autres composants finement divisés ayant une grosseur de grains de 0,05 à 0,1 mm étant toujours utilisée, et ce mélange étant façonné dans un processus de pressage ou de coulée, à l'occasion duquel la surface est réalisée en forme de relief avec une structure en filigrane qui correspond à des surfaces de pierres de carrière et/ou à des reliefs de pierres taillées, où la surface est pourvue a posteriori d'un mince revêtement adhésif de surface, où on enlève de la surface des composants devenus solubles, pour donner une impression poreuse avec un effet d'altération due aux intempéries.

6. Procédé selon la revendication 5, caractérisé en ce que l'on coule les pierres, lors de deux étapes successives, à partir de couches qui se différencient par leur aspect extérieur et/ou leur stabilité mécanique.

7. Procédé selon la revendication 6, caractérisé en ce qu'une couche de support stable est coulée sur la face arrière d'une couche décorative.

8. Procédé selon la revendication 6 ou 7, caractérisé en que la face arrière et/ou la face interne a une forme plane ou creuse et est éventuellement renforcée par un matériau fibreux et/ou des nappes de fils métalliques.

9. Utilisation de pierres artificielles selon l'une des revendications 1 à 4 pour la fabrication de reproductions d'objets d'art, d'articles d'art décoratif, d'emballages pour des articles de couvercles pour des commutateurs tifs d'usage quotidien, de caches pour des commutateurs électriques et des prises de courant, pour l'aménagement intérieur de pièces d'habitation, de locaux administratifs, de salles de représentation et de salles gastronomiques, de cuisines, de selles de bain, de revêtements intérieurs de piscines, ainsi que de produits intermédiaires pour une transformation ultérieure effectuée par des artistes, des artisans d'art et des bricoleurs.

10. Utilisation de pierres artificielles selon l'une des revendications 1 à 4 pour la fabrication de plaques à revêtement résistant aux intempéries pour des travaux de construction en extérieur.
